# EUROPÄISCHE PATENTSCHRIFT

(11) **EP 0 415 068 B1**
(45) Veröffentlichungstag und Bekanntmachung des Hinweises auf die Patenterteilung: **20.03.1996**
(21) Anmeldenummer: 90114030.1
(22) Anmeldetag: 21.07.1990
(51) Int. Cl.: B29C 65/14, B29L 23/22

(54) **Einrichtung und Verfahren zum Verschweissen rohrförmiger Teile aus thermoplastischem Material**
Process and apparatus for welding tubular thermoplastic elements
Procédé et appareil pour le soudage d'éléments tubulaires en matière thermoplastique

(30) Priorität: 31.08.1989 CH 3159/89
(43) Veröffentlichungstag der Anmeldung: 06.03.1991
(73) Patentinhaber: GEORG FISCHER AKTIENGESELLSCHAFT, CH-8201 Schaffhausen (CH)
(72) Erfinder: Kunz, Peter, CH-8200 Schaffhausen (CH)

(56) Entgegenhaltungen:
- EP-A- 0 304 572
- EP-A- 0 313 731
- BE-A- 629 609
- CH-A- 540 450
- DE-A- 3 023 838
- FR-A- 1 476 398
- FR-A- 2 062 913
- US-A- 4 156 626
- US-A- 4 419 169
- PATENT ABSTRACTS OF JAPAN vol. 8, no. 210 (M-328)(1647) 26. September 1984 & JP-A-59 098 817 (UBE KOSAN KK) 7. Juni 1984
- PATENT ABSTRACTS OF JAPAN vol. 9, no. 194 (M-403)(1917) 10. August 1985 & JP-A-60 060 497 (HITACHI SEISAKUSHO KK) 8. April 1985
- PATENT ABSTRACTS OF JAPAN vol. 14, no. 69 (M-932)(4012) 8. Februar 1990 & JP-A-1 288 422 (KURARAY CO LTD) 20. November 1989
- PATENT ABSTRACTS OF JAPAN vol. 12, no. 152 (M-695)(2999) 11. Mai 1988 & JP-A-62 027 126 (TAKAO YOSHIDA) 26. November 1987

## Beschreibung

Die Erfindung betrifft eine Einrichtung zum Verschweissen rohrförmiger Teile aus einem thermoplastischen Material, wie sie im Oberbegriff von Anspruch 1 beschrieben ist, sowie ein Verfahren zur Herstellung einer nut- und wulstfreien Rohrverbindung.

Durch die DE-C2-29 23 205 ist ein Verfahren und eine Vorrichtung zum nahtlosen Verbinden von thermoplastischen, rohrförmigen Teilen bekanntgeworden, bei welchem die zusammenstossenden Enden der rohrförmigen Teile mit einer die Teile umschliessenden Heizvorrichtung über den ganzen Umfang plastifiziert und unter Druck verbunden werden und bei dem gleichzeitig im Inneren der rohrförmigen Teile eine im Volumen veränderbare Stützvorrichtung eingebracht wird, die sich glatt an die Innenwand der rohrförmigen Teile anlegt.

Nachteilig hierbei ist, dass zum Aufschmelzen der für eine gute Schweissverbindung erforderlichen Materialmenge eine lange Heizzeit erforderlich ist. Insbesondere bei grösseren Rohrdurchmessern mit entsprechend grossen Wanddicken ist eine unverhältnismässig hohe Schweisszeit erforderlich.

In der DE 30 23 838 (D2) wird eine Löt- bzw. Schweissvorrichtung für Längsprofile beschrieben. Mit dieser Vorrichtung können zwei Rohre mittels mindestens zwei Infrarotstrahlern aufgeheizt und miteinander verschweisst werden. Vorteilhaft ist bei dieser Vorrichtung, dass sie zum Verschweissen oder zum Verlöten von metallischen und nichtmetallischen Werkstücken geeignet ist. Die Vorrichtung ist dafür entsprechend ausgebildet und weist beispielsweise eine Zuführung für Schutzgas an die Löt- bzw. Schweissstelle auf.

Aufgabe der vorliegenden Erfindung ist die Schaffung einer Einrichtung zum wulst- und nutenfreien Schweissen der eingangs genannten Art, welche kürzere Schweisszeiten als mit den bisher bekannten Einrichtungen ermöglicht.

Diese Aufgabe wird durch die in den unabhängigen Ansprüchen 1 und 5 angegebene Lehre gelöst.

Weitere vorteilhafte Ausgestaltungen der Erfindung sind in den abhängigen Ansprüchen gekennzeichnet.

Durch die Anordnung einer Stützschale aus einem Infrarotstrahlen durchlässigen Material ist trotz allseitiger Abdeckung des Schweißbereiches die Verwendung einer Infrarot-Strahlen-Heizquelle möglich, wodurch kurze Schweisszeiten erreicht werden.

Durch die rotierende Anordnung einer Infrarot-Strahlen-Heizquelle wird ein in Richtung der Längsachse strich- oder streifenförmiges Strahlenbild erzeugt.

Die Erfindung ist in den beiliegenden Zeichnungen anhand von Ausführungsbeispielen vereinfacht dargestellt und nachfolgend beschrieben.

Es zeigen:
- Fig. 1: einen schematischen Längsschnitt der Einrichtung in einer ersten Ausführungsform
- Fig. 2: ein Diagramm des Temperaturverlaufes
- Fig. 3: eine zweite Ausführungsform der in Fig. 1 gezeigten Einrichtung.
- Fig. 4: eine dritte Ausführungsform der in Fig. 1 gezeigten Einrichtung.

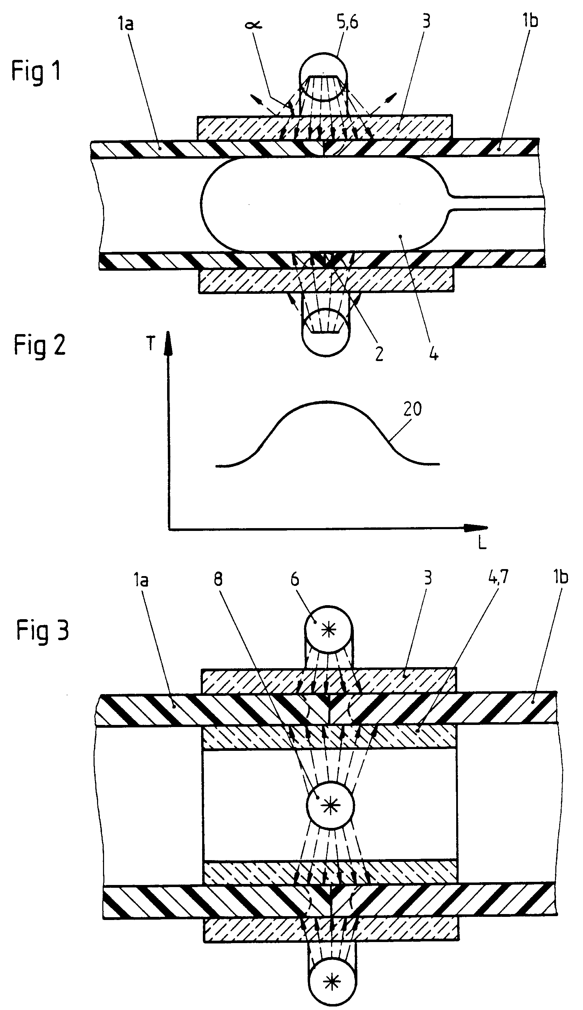

Fig. 1 zeigt zwei rohrförmige, aus einem thermoplastischen Material bestehende Teile 1a, 1b, deren stirnseitige Enden 2 aneinanderliegend in der schematisch dargestellten Einrichtung zum Verschweissen gehalten sind. Die Einrichtung weist eine am Aussenumfang der rohrförmigen Teile 1a, 1b angeordnete Stützschale 3, eine im Inneren der rohrförmigen Teile 1a, 1b angeordnete Abstützvorrichtung 4 und eine Heizvorrichtung 5 auf.

Die Heizvorrichung 5 weist eine Infrarot-Strahlungs-Heizquelle 6 auf, welche ringförmig ausgebildet und mit gleichmässiger Distanz zum Aussenumfang der Stützschale 3 um diese angeordnet ist.

Die Stützschale 3 besteht aus einem die Infrarot-Strahlen durchlässigen Material wie z.B. aus einem Quarzglas, einem Calcium-Aluminatglas, einem Germanatglas oder einem Arsensulfidglas und ist vorzugsweise zweiteilig aus zwei aufklappbaren Schalenhälften ausgebildet.

Die Abstützvorrichtung 4 besteht vorzugsweise aus einer mittels eines Druckmediums aufweitbaren, elastischen Blase, welche im Bereich der Stossstelle einen Druck gegen den Innenumfang der rohrförmigen Teile erzeugt. Die Abstützvorrichtung 4 kann auch aus einem zerstörbaren Rohrstück oder Stöpsel bestehen.

Die Infrarot-Strahlungs-Heizquelle 6 gewährleistet ein rasches Aufschmelzen des thermpolastischen Materiales im Schweissbereich an der Stossstelle.

Das in Fig. 2 dargestellte, gewünschte Temperaturprofil 20 in Längsrichtung der rohrförmigen Teile wird erreicht durch die Distanz von der Infrarot-Strahlungsheizquelle 6 zur Oberfläche der rohrförmigen Teile 1a, 1b sowie durch teilweise Reflektion der Heizstrahlen bei kleiner werdendem Winkel d gemäss Fig. 1. Die Infrarot-Strahlen sollen eine derartige Wellenlänge aufweisen, dass ein möglichst tiefes Eindringen der Wärme in das thermoplastische Material stattfindet, wobei jedoch gleichzeitig die Strahlungswärme keine Zerstörung des thermoplastischen Materiales an der Oberfläche oder im Inneren verursachen darf.

An Stelle der ringförmig ausgebildeten Infrarot-Strahlungsheizquelle kann eine einzelne Infrarot-Strahlungsheizquelle um die Stützschale rotierend angeordnet werden, welche ein in Richtung der Längsachse strich- oder streifenförmiges Strahlenbild erzeugt. Durch die Rotation des Strahlenbildes wird umfangsmässig jeweils fortlaufend immer nur ein Teilstück aufgeschmolzen, wodurch ein guter Aufbau des Schweissdruckes gegeben ist. Durch eine verstellbare Veränderung des Rotationsradius kann auch bei unterschiedlichen Durchmessern der rohrförmigen Teile die günstigste Distanz zwischen der Infrarot-Strqahlungsheizquelle 6 und der Oberfläche der rohrförmigen Teile 1a, 1b eingestellt werden.

Fig. 3 zeigt eine Ausführung der Einrichtung insbesonders zum Schweissen von rohrförmigen Teilen 1a, 1b mit grösseren Durchmessern.

Hierbei ist die innere Abstützvorrichtung 4 gleich wie die äusseren Stützschalen 3 ebenfalls als ein die Infrarot-Strahlen durchlässiges, rohrförmiges Stützteil 7 ausgebildet, wobei im Innenraum eine zweite Infrarot-Strahlungs-Heizquelle 8 angeordnet ist. Diese kann - wie aus Fig. 3 ersichtlich - zentrisch angeordnet sein und ein umfangsmässig geschlossenes Strahlbild erzeugen oder als rotierende Infrarot-Strahlen-Heizquelle ausgebildet sein, wobei sie durch radiale Verstellbarkeit für unterschiedliche Rohrdurchmesser einstellbar ist. Durch die gleichzeitige Erwärmung des thermoplastischen Materiales von aussen und von innen werden sehr kurze Plastifizierzeiten und somit kurze Schweisszeiten erreicht, so dass auch Rohre mit grösseren Wandstärken rationell wulst- und nutenfrei verschweisst werden können.

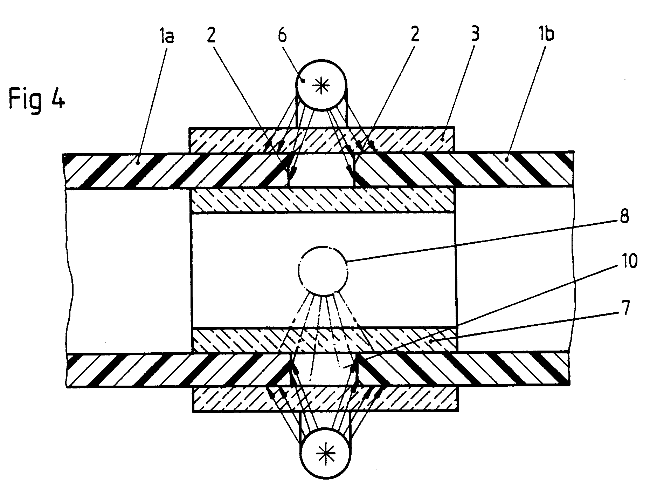

Bei der in der Fig. 4 gezeigten Einrichtung werden die rohrförmigen Teile 1a, 1b mit einer Distanz der stirnseitigen Enden 2 zueinander gehalten.

Die Enden der rohrförmigen Teile 1a, 1b sowie der Zwischenraum 10 werden am Aussenumfang durch die Infrarotstrahlen durchlässige Stützschale 3 und am Innenumfang durch das rohrförmige Stützteil 7 abgedeckt. Das Aufschmelzen der stirnseitigen Enden 2 und ein Teil des Endbereiches erfolgt entweder nur von aussen durch eine wie zu Fig. 1 beschriebenen Infrarot-Strahlungsheizquelle 6 oder bei grösseren Rohrdurchmessern von aussen und von innen mit einer zweiten Infrarot-Strahlungs-Heizquelle 8 wie zu Fig. 3 beschrieben.

Nach dem Aufschmelzen des thermoplastischen Materiales, welches durch die dreiseitige Zugänglichkeit der Enden 2 für die Infrarotstrahlen sehr rasch erfolgt, werden die beiden rohrförmigen Teile 1a, 1b mittels einer weiter nicht dargestellten Vorrichtung zusammengeschoben, wobei mittels eines einstellbaren Druckes beim Verschieben der erforderliche Schweissdruck erzeugt wird. Durch die Stützschale und die innere Abstützvorrichtung ist ein Ausweichen des aufgeschmolzenen Materiales nicht möglich, wodurch eine feste, wulstfreie Schweissung entsteht.

Zur Verkürzung der gesamten Schweisszeit kann die Einrichtung mit einer Kühlvorrichtung versehen sein, welche nach Abschalten der Infrarot-Strahlungs-Heizquelle den Schweissbereich von aussen, von innen oder von beiden Seiten z. B mittels Luft bis zur Verfestigung der Schweissverbindung rasch abkühlt.

## Patentansprüche

1. Einrichtung zum wulst- und nutenfreien Verschweissen rohrförmiger Teile (1a, 1b) aus thermoplastischem Material, wobei das mittels einer Heizvorrichtung (5) aufzuschmelzende Material durch eine am Aussenumfang angeordnete Stützschale (3) und am Innenumfang angeordnete Abstützvorrichtung (4) umfangseitig umschlossen ist, dadurch gekennzeichnet, dass die Heizvorrichtung (5) mindestens eine außerhalb der Stützschale (3) angeordnete Infrarot-Strahlungs-Heizquelle (6) aufweist und die Stützschale (3) aus einem Infrarot-Strahlen durchlässigen Material besteht, wobei die Infrarot-Strahlungs-Heizquelle (6) in Umfangsrichtung rotierbar angeordnet und für die Erzeugung eines quer zur Umfangsrichtung strich- oder streifenförmigen Strahlenbildes ausgebildet ist.

2. Einrichtung nach Anspruch 1, dadurch gekennzeichnet, dass die Infrarot-Strahlungs-Heizquelle (6) mit gleichmässiger, einstellbarer Distanz zum Aussenumfang der äusseren Stützschale (3) rotierbar angeordnet ist.

3. Einrichtung nach einem der Ansprüche 1 und 2, dadurch gekennzeichnet, dass zu der ausserhalb der Stützschale (3) angeordneten Infrarot-Strahlungs-Heizquelle (6) eine zweite Infrarot-Strahlungs-Heizquelle (8) im Innenraum der rohrförmigen Teile (1a, 1b) angeordnet ist und dass die innere Abstützvorrichtung (4) als rohrförmiges Stützteil (7) ausgebildet und aus einem Infrarot-Strahlen durchlässigen Material besteht.

4. Einrichtung nach Anspruch 3, dadurch gekennzeichnet, dass die zweite Infrarot-Strahlungs-Heizquelle (8) im Innenraum der rohrförmigen Teile (1a, 1b) mit gleichmässiger Distanz zum Innenumfang des rohrförmigen Stützteiles (7) rotierbar angeordnet ist.

5. Verfahren zur Herstellung einer wulst- und nutenfreien Schweissverbindung von rohrförmigen Teilen (1a, 1b) aus einem thermoplastischen Material, wobei Material mittels einer Heizvorrichtung (5), insbesondere mittels mindestens einer Infrarot-Strahlungs-Heizquelle (6), aufgeschmolzen wird, das Material durch eine Stützschale (3) am Aussenumfang und eine Abstützvorrichtung (4) am Innenumfang gestützt wird, und die stirnseitigen Enden (2) der rohrförmigen Teile vom Aussenumfang her aufgeschmolzen werden, dadurch gekennzeichnet, daß die Heizvorrichtung (5) mindestens eine in Umfangsrichtung rotierbar angeordnete Infrarot-Strahlungs-Heizquelle (6) aufweist, und die Stützschale (3) vom Infrarot-Strahler abgegebene Strahlen durchlässt, wobei fortlaufend immer ein Teilstück der rohrförmigen Teile (1a, 1b) aufgeschmolzen wird und ein quer zur Umfangsrichtung strich- oder streifenförmiges Strahlenbild erzeugt wird, und wobei gegebenenfalls die stirnseitigen Enden (2) der Rohrförmigen Teile zusätzlich mittels einer zweiten Infrarot-Strahlungs-Heizquelle (8) und der als rohrförmiges Stützteil ausgebildeten und aus einem Infrarot-Strahlen durchlässigen Material bestehenden inneren Abstützvorrichtung (4) vom Innenumfang her aufgeschmolzen werden.

6. Verfahren nach Anspruch 5, dadurch gekennzeichnet, dass die stirnseitigen Enden (2) der rohrförmigen Teile (1a, 1b) gegenseitig anliegend aufgeschmolzen werden.

7. Verfahren nach Anspruch 5 und 6, dadurch gekennzeichnet, dass die stirnseitigen Enden (2) der rohrförmigen Teile (1a, 1b) mit einer Distanz zueinander aufgeschmolzen werden und anschliessend durch axiales Verschieben mit Druck zusammengefügt werden.

8. Verfahren nach einem der Ansprüche 5 bis 7, dadurch gekennzeichnet, dass nach dem Aufschmelzen des Materiales die Verbindungsstelle mittels eines Mediums, wie z.B. Kühlluft, gekühlt wird.

## Claims

1. Device for the bead- and groove-free welding of tubular parts (1a, 1b) made of thermoplastic material, the material to be melted by means of a heating device (5) being surrounded by a support shell (3) arranged on the outer circumference and a support device (4) arranged on the inner circumference, characterised in that the heating device (5) has at least one infra-red radiation heat source (6) arranged outside the support shell (3), and the support shell (3) is made of a material permeable to infra-red rays, the infra-red radiation heat source (6) being rotatably arranged in the circumferential direction and constructed for the production of a linear or lamellar radiation pattern transverse to the circumferential direction.

2. Device according to claim 1, characterised in that the infra-red radiation heat source (6) is rotatably arranged with uniform adjustable spacing from the outer circumference of the outer support shell (3).

3. Device according to one of claims 1 and 2, characterised in that in addition to the infra-red radiation heat source (6) arranged outside the support shell (3) there is arranged a second infra-red radiation heat source (8) inside the tubular parts (1a, 1b) and in that the inner support device (4) is constructed as a tubular support part (7) and is made of a material permeable to infra-red rays.

4. Device according to claim 3, characterised in that the second infra-red radiation heat source (8) is arranged rotatably inside the tubular parts (1a, 1b) with uniform spacing from the inner circumference of the tubular support part (7).

5. Process for the production of a bead- and groove-free weld connection of tubular parts (1a, 1b) of a thermoplastic material, in which the material is melted by means of a heating device (5), in particular by means of at least one infra-red radiation heat source (6), the material is supported by a support shell (3) on the outer circumference and a support device (4) on the inner circumference, and the facing ends (2) of the tubular parts are melted from the outer circumference, characterised in that the heating device (5) has at least one infra-red radiation heat source (6) arranged rotatably in the circumferential direction, and the support shell (3) is transparent to rays emitted by the infra-red radiation system, whereby a portion of the tubular parts (1a, 1b) is constantly being melted progressively and a linear or lamellar radiation pattern is produced transversely to the circumferential direction, the facing ends (2) of the tubular parts if required being additionally melted from the inner circumference by means of a second infra-red radiation heat source (8) and the inner support device (4) constructed as a tubular support part and made of a material permeable to infra-red rays.

6. Process according to claim 5, characterised in that the facing ends (2) of the tubular parts (1a, 1b) are melted in mutually abutting fashion.

7. Process according to claim 5 and 6, characterised in that the facing ends (2) of the tubular parts (1a, 1b) are melted with a spacing from each other and are then joined together by axial movement with pressure.

8. Process according to one of claims 5 to 7, characterised in that after melting of the material the connection point is cooled by a medium such as cool air, for instance.

## Revendications

1. Dispositif destiné au soudage exempt de bourrelets et de gorges d'éléments tubulaires (1a, 1b) en matériau thermoplastique, le matériau à fondre au moyen d'un dispositif de chauffage (5) étant entouré en circonférence par une coquille de support (3) disposée sur la circonférence extérieure, et par un dispositif de maintien (4) disposé sur la circonférence intérieure, caractérisé en ce que le dispositif de chauffage (5) comporte au moins une source de chauffage (6) à rayonnement infrarouge disposée à l'extérieur de la coquille de support (3), et en ce que la coquille de support est constituée d'un matériau perméable aux rayons infrarouges, la source de chauffage (6) à rayonnement infrarouge étant disposée afin de pouvoir tourner dans le sens de la circonférence et conçue pour émettre un faisceau de rayonnement en forme de trait ou de bande transversalement au sens de la circonférence.

2. Dispositif selon la revendication 1, caractérisé en ce que la source de chauffage (6) à rayonnement infrarouge est disposée de façon à pouvoir tourner à une distance constante ajustable par rapport à la circonférence extérieure de la coquille extérieure de support (3).

3. Dispositif selon l'une des revendications 1 et 2, caractérisé en ce qu'en plus de la source de chauffage (6) à rayonnement infrarouge disposée à l'extérieur de la coquille de support (3), une deuxième source de chauffage (8) à rayonnement infrarouge est disposée dans l'espace intérieur des éléments tubulaires (1a, 1b), et en ce que le dispositif intérieur de maintien (4) est conçu sous la forme d'un élément tubulaire de support (7) et est constitué d'un matériau perméable aux rayons infrarouges.

4. Dispositif selon la revendication 3, caractérisé en ce que la deuxième source de chauffage (8) à rayonnement infrarouge est disposée dans l'espace intérieur des éléments tubulaires (1a, 1b) afin de pouvoir tourner à une distance constante par rapport à la circonférence intérieure de l'élément tubulaire de support (7).

5. Procédé destiné à la réalisation d'une liaison soudée exempte de bourrelets et de gorges d'éléments tubulaires (1a, 1b) en un matériau thermoplastique, du matériau étant fondu au moyen d'un dispositif de chauffage (5), notamment au moyen d'au moins une source de chauffage (6) à rayonnement infrarouge, le matériau étant supporté sur la circonférence extérieure par une coquille de support (3) et sur la circonférence intérieure par un dispositif de maintien (4), et les extrémités frontales (2) des éléments tubulaires étant fondues à partir de la circonférence extérieure, caractérisé en ce que le dispositif de chauffage (5) comporte au moins une source de chauffage (6) à rayonnement infrarouge qui est disposée de façon à pouvoir tourner dans le sens de la circonférence, et en ce que la coquille de support (3) est perméable aux rayons émis par les radiateurs à rayons infrarouges, un tronçon partiel des éléments tubulaires (1a, 1b) étant toujours fondu en continu, un faisceau de rayonnement en forme de trait ou de bande étant émis transversalement au sens de la circonférence, et les extrémités frontales (2) des éléments tubulaires étant, le cas échéant, fondues également à partir de la circonférence intérieure au moyen d'une deuxième source de chauffage (8) à rayonnement infrarouge et du dispositif intérieur de maintien (4), qui est conçu sous la forme d'un élément tubulaire de support et constitué d'un matériau perméable aux rayons infrarouges.

6. Procédé selon la revendication 5, caractérisé en ce que les extrémités frontales (2) des éléments tubulaires (1a, 1b) sont fondues en étant mutuellement aboutées.

7. Procédé selon l'une des revendications 5 et 6, caractérisé en ce que les extrémités frontales (2) des éléments tubulaires (1a, 1b) sont fondues à une certaine distance l'une de l'autre, et ensuite assemblées par pression au moyen d'un déplacement axial.

8. Procédé selon l'une des revendications 5 à 7, caractérisé en ce que, après la fusion du matériau, le point de liaison est refroidi au moyen d'un fluide tel que de l'air de refroidissement, par exemple.
